# EUROPEAN PATENT SPECIFICATION

(11) **EP 2 495 913 B1**
(45) Date of publication and mention of the grant of the patent: **31.07.2019**
(21) Application number: 10854616.9
(22) Date of filing: 12.10.2010
(51) Int. Cl.: H04L 12/28, H04L 29/06

(54) **MULTI-VIRTUAL SERIAL PORT SYSTEM AND COMMUNICATION METHOD THEREOF**
MEHRFACH VIRTUELLES SERIENANSCHLUSSSYSTEM UND KOMMUNIKATIONSVERFAHREN DAFÜR
SYSTÈME DE PORTS SÉRIE MULTIVIRTUEL ET PROCÉDÉ DE COMMUNICATION ASSOCIÉ

(30) Priority: 15.07.2010 CN 201010232240
(43) Date of publication of application: 05.09.2012
(73) Proprietor: ZTE Corporation, Shenzhen, Guangdong 518057 (CN)
(72) Inventor: CHEN, Mingen, Guangdong 518057 (CN); LIU, Junfeng, Guangdong 518057 (CN)
(74) Representative: Novagraaf Technologies
(86) International application number: PCT/CN2010/077691
(87) International publication number: WO 2012/006824

(56) References cited:
- EP-A2- 1 233 631
- EP-A2- 1 826 672
- CN-A- 1 921 431
- US-A1- 2007 155 324
- US-A1- 2009 046 685
- US-B1- 6 760 804
- NING, SHUANGLONG ET AL.: 'Design and Application for Virtual Serial Port in Wireless Protocol Conversion System.' JOURNAL OF HANGZHOU DIANZI UNIVERSITY. vol. 29, no. 5, October 2009, pages 83 - 86, XP008159768
- CAO, GUIPING.: 'Design for vxWorks Serial Port driver program.' MICROCOMPUTER APPLICATIONS. vol. 29, no. 11, November 2008, pages 72 - 76, XP008159771

## Description

### Field of the Invention

The present invention relates to the communication field, and in particular to a multi-virtual serial port system and a communication method thereof.

### Background of the Invention

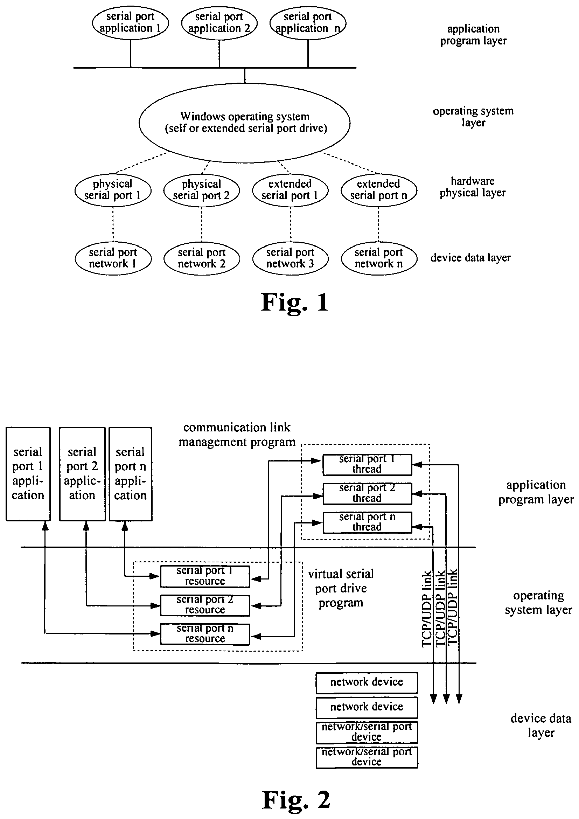

Generally, the physical serial port resources in common computers are limited and there are usually 1 to 2 (such as com1, com2, etc.), when the real service application requirements are more than the real hardware configuration of the system, the conventional method is to extend the number of physical serial ports and to provide serial port physical chip circuit board cards and drivers by the specialized company, so as to achieve the configuration and usage of a plurality of physical serial ports, which is frequently used in the traditional industrial occasions, but causes the most direct problem of increasing the investment costs. As shown in Fig. 1, it shows the networking architecture of conventional serial ports.

A method appears in relevant art, i.e. the technology of combined virtual serial port and network communication, thus it achieves to switch the conventional serial port device to the IP network and achieves the transparent transmission of serial port data in the network. Considering of being compatible with the currently available serial port application software, so as to make the change of bottom layer communication mode completely shielded for the serial port application, thus, the virtual serial port drive (driver) can achieve software extension without extending serial ports by hardware, thereby reducing the costs. At the same time, the virtual serial port can achieve the function of accessing the IP network through the serial port (i.e. accessing the server through the serial port) under the premise that the original serial port application software are not changed.

In the above relevant art, since serial port threads are often provided on the operating system layer, it causes the virtual serial port network architecture to be unclear and is disadvantageous for the users to perform developing, designing, maintaining, and monitoring.

US 6760804B1 provides a related technical solution; however, the above mentioned problem still remains unsolved

### Summary of the Invention

The main object of the present invention is to provide a multi-virtual serial port system and an implementing method thereof so as to solve the above problem that the network transmission architecture of virtual serial ports is not clear enough and it is disadvantageous for the users to perform monitoring, developing, designing, and maintaining.

A multi-virtual serial port system is provided according to one aspect of the present invention, which multi-virtual serial port system comprises more than one serial port management modules, located in the application layer of the multi-virtual serial port system and configured multi-virtual serial port system.

A communication method for a multi-virtual serial port system is provided according to another aspect of the present invention, which method comprises: receiving, by a serial port management module in the application layer of the multi-virtual serial port system, a serial port communication request from an application program; and calling, by the serial port management module, a serial port resource corresponding to a serial port device in an operating system of the multi-virtual serial port system so as to perform the serial port communication requested by the serial port communication request.

By way of the present invention, a multi-virtual serial port system which comprises the following structures is used: a plurality of serial port management modules (more than one serial port management modules), located in the application layer of said multi-virtual serial port system, used for calling a serial port resource of a corresponding serial port device to perform serial port communication, wherein said serial port resource is located in the operating system layer of said multi-virtual serial port system, which solves the problem that the network transmission architecture of the virtual serial port is not clear enough and it is disadvantageous for the users to perform monitoring, thus achieving the effects of making the code implementation brief, making the number of virtual serial ports large, and making the data traffic large.

The present invention defines a system according to claim 1 and a method according to claim 5. Further embodiments are set forth in the dependent claims 2-4 and 6-8.

### Brief Description of the Accompanying Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of serial port networking according to relevant art;
Fig. 2 is a schematic diagram of a multi-virtual serial port system according to the embodiments of the present invention;
Fig. 3 is a flow chart of an implementing method for a multi-virtual serial port system according to the embodiments of the present invention; and
Fig. 4 is a flow chart of a communication method for a multi-virtual serial port system according to the embodiments of the present invention.

### Detailed Description of the Embodiments

The embodiments of the present invention will be described hereinafter in detail in conjunction with the drawings thereof. It needs to note that the embodiments of the present invention and the features in the embodiments can be combined with each other if there is no conflict.

A multi-virtual serial port system and an implementing method for the same are provided according to the embodiments of the present invention.

Fig. 2 is a schematic diagram of a multi-virtual serial port system according to the embodiments of the present invention.

As shown in Fig. 2, the multi-virtual serial port system according to the embodiments of the present invention comprises more than one serial port management modules, which more than one serial port management modules are located in the application layer of the above multi-virtual serial port system and used for calling a serial port resource of a corresponding serial port device to perform serial port communication, wherein this serial port resource is located in the operating system layer of the above multi-virtual serial port system. The more than one serial port management modules can be located in an application layer communication link management program in the above multi-virtual serial port system, and one certain serial port management module performs data interaction communication with corresponding serial port resource which is located in a virtual serial port drive (driver) program in the operating system layer.

As shown in Fig. 2, the multi-virtual serial port system comprises an application program layer, an operating system layer and a device data layer, and a communication link management program is located in the application program layer. In this embodiment, since more than one serial port threads are provided in the communication link management program, the serial port thread(s) is provided in the application layer, so as to make the code implementation brief and make the development and maintenance more convenient and be convenient for the user to perform monitoring.

In the downward direction, serial port n application performs interaction operation with the corresponding serial port device resource in the virtual serial port drive program of the multi-virtual serial port system by opening serial port behavior, closing serial port behavior, writing data and reading data.

A corresponding virtual serial port drive program in the operating system informs the serial port management module in the application layer of the multi-virtual serial port system to receive a serial port communication request from the serial port n application of the application program.

In the upward direction, once receiving the data of a network device, the serial port management module calls a serial port resource of a corresponding serial port device in the operating system of the multi-virtual serial port system to generate data communication at the network side, thus the application serial port n application reads the data at the network side, so that the upward data interaction from the network device to a serial port application via TCP/UDP communication is finished.

The step of performing the interaction between the application program serial port n application with a serial port resource of a corresponding serial port device in the operating system of the multi-virtual serial port system comprises: the operations such as opening, closing, reading and writing performed by the application serial port n application are in one-to-one correspondence with the serial port drive example number in the operating system of the multi-virtual serial port system, and at the same time, the serial port drive (driver) sets an event to inform the serial port management module of the communication link management program, thus there is one-to-one correspondence among the application serial port n application, serial port driver resources and serial port management module. This achieves the downward data flow from the application serial port n application to, the serial port drive of the operating system, the serial port management module of the communication link management program, and the network device.

Once receiving the data at the network device side, the serial port management module of the communication link management program will call the serial port resource of a corresponding serial port device in the operating system of the multi-virtual serial port system, and then the application program serial port n application is reached, so as to perform the upward data flow of the TCP/UDP communication requested by the network device communication.

The resource writing data area event flag of the virtual serial port drive is automatically reset for more than one times, and the serial port management module of the communication link management program is informed to read the data for more than one times till the data is read over. Every time the first reading operation behavior of the communication link management program occurs, it automatically detects whether there is valid data in the driven writing data ring cache area, if yes, then the writing data area event flag is reset again and is automatically reset repeatedly until the operation of reading the data is finished.

The threads of more than one serial port management modules of the communication link management program which is located in the application layer of the multi-virtual serial port system are monitored by the communication link management program, and once the thread exits, the watch dog will automatically restart the serial port management module of this thread.

The virtual serial port drive program achieves the server working mode that the windows operating system maintains a virtual serial port example list, a large number of serial port examples are achieved utilizing the IRP message, and the data traffic is very large.

The above serial port resource can be more than one serial port resource, wherein the more than one serial port resources are in one-to-one correspondence with the more than one serial port management modules, and the more than one serial port resources are in one-to-one correspondence with the more than one serial port applications program.

The serial port resource can be in communication with the more than one serial port management modules by using an I/O Request Package (IRP, Input/Output Request Package) message.

Each serial port resource includes: a reading data cache area, a writing data cache area, a timer resource, an event resource, and a lock resource.

The above multi-virtual serial port system further comprises: more than one reading data cache areas and more than one the writing data cache areas, located in the operating system layer of the multi-virtual serial port system, wherein each reading data cache area and each writing data cache area are used for being accessed by one serial port management module respectively.

The present invention can achieve the combination of windows operating system virtual serial port drive and network communication technology. Thus, it is suitable for the development and application occasions of the network communication and the windows operating system virtual serial port drive.

The present invention can achieve to replace the serial port communication system with the TCP/IP network communication system and keep the application software serial port manner work normally.

As shown in Fig. 1, the present invention uses the following technical solution. The application program layer is serial port application and it is mainly to create a serial port, open a serial port, read a serial port, write a serial port, including synchronous and asynchronous operations, such as serial port debugging assistant, super terminal. The operating system layer is a serial port drive attached by the operating system itself or a serial port drive program provided by a specialized manufacturer. The hardware physical layer is a physical serial port or an extended physical serial port, or a circuit chip board which provides a certain number of real physical serial ports. The device data layer refers to various terminal devices with serial ports and a RS232/RS422/RS485 network formed based on physical serial ports.

In the present invention, the virtual serial port drive is a program which can operate in a Windows platform computer, wherein this drive program can create several "virtual" serial ports. It can be seen from the serial port application program that these virtual serial ports are the same as physical serial ports. In the application program encoding, the operations of the physical serial port, such as opening a serial port, reading data, writing data and synchronous and asynchronous mode operations, are the same as those operations of conventional common physical serial port. The reading or setting of various parameters of the serial port device can be achieved by a windows related application program interface (abbreviated as API). Then, they are stored into the communication link management program and interact with the physical serial ports of the network/serial port converting device in the device data layer, and there are two application scenarios here: serial port-network and serial port-network-serial port. The process of the former is relatively simple, in which the serial port data can be just encapsulated into IP, while the latter needs the process of being recovered to be the data of serial ports after being transmitted by the network. Furthermore, the operation (such as setting attributes, etc.) performed by the serial port application program for the virtual serial port will finally act on the physical serial ports of a corresponding device through the network transmission, and the transmission via the network is equivalent to the stretching of the serial port line, while what the serial port application sees is still point-to-point communication of serial port-serial port.

It can be seen from the comparison of Fig. 1 and Fig. 2 that the original serial port application program can be used without any modification. The difference between the virtual serial port driver and conventional physical serial port driver lies in the transmission of bottom layer data. In the application program layer, various software of the serial port application can perform operations, such as opening, reading, writing data, for different serial ports via relevant API. These data interaction information behaviors interact with the drive program. The conventional serial port drive program will operate the real physical serial port chip due to these different operation behaviors. As to these operation behaviors, the virtual serial port drive program directly performs information interaction with the communication link management program of the application program layer, and the communication link management program further interacts with various communication devices of the device data layer, which includes general network devices and network/serial port converting device. These data interaction is bidirectional. The communication link management program communicates with various communication device using different communication transmission protocols, including TCP server, TCP client, UDP, etc., wherein the particular protocol type software can be configured, so that the advantages such as long distance transmission of the network can be sufficiently embodied. Accordingly, neither the serial port device nor the computer serial port application program can recognize the difference between real serial transmission and virtual serial transmission, thereby achieving the transparent transmission.

As to the virtual serial port drive program, as compared with the prior art, the implementation objects and principles of each manufacture are of little difference, but there are a wide variety of design methods and they all have their own advantages and disadvantages. Some manufacturers achieve multi-thread in the core drive program, and at the same time also provide windows related API support for the communication link management program, and both the serial port application program and communication link management program can perform operations via a standard API interface; the advantage of this solution is that the program architecture is clear, makes it convenient to be developed and used by the third party software because a standard API interface is used for access.

In the virtual serial port drive design of the present invention, one serial port resource is opened up for each virtual serial port correspondingly, and the core does not achieve multi-threads; however, the multi-thread technology is used by the communication link management program, and each virtual serial port corresponds to one thread, which thread is only responsible for the interaction of various operation behavior messages of this virtual serial port resource and is in the data communication with relevant communication devices of the device data layer. The drive program uses an IRP message for driving, and the message queue is maintained by the windows operating system itself; both the operation of reading ring data areas and the operation of writing ring data areas use event notification manner, as compared to those drive programs using the manners such as driving multi-thread and shared memory, the design of multi-level ring cache can achieve the rational structure as well as highly efficient logic, brief code and well maintainability. In addition, the virtual serial port example list is maintained by the windows operating system itself, and the server working manner that there are a large number of serial port examples and data traffic is very large can be achieved using an IRP message.

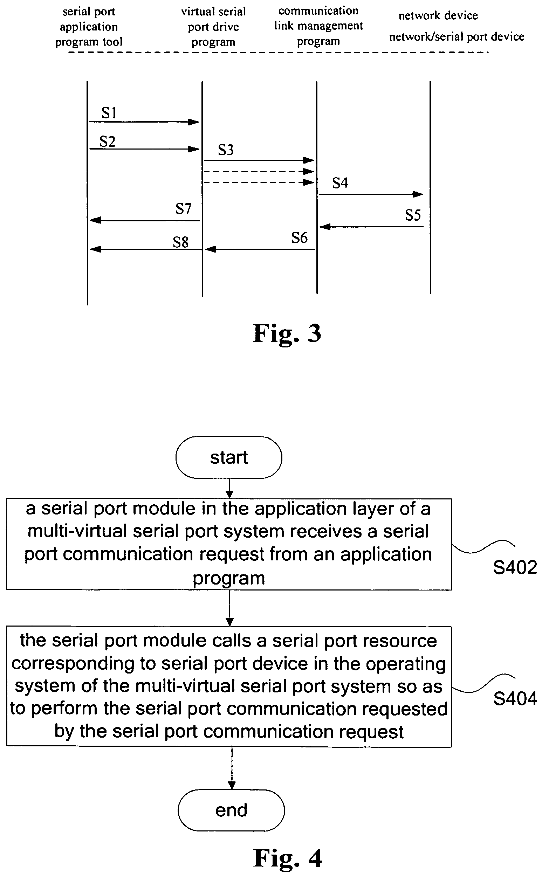

Fig. 3 is a flow chart of an implementing method for a multi-virtual serial port system according to the embodiments of the present invention.

As shown in Fig. 3, DriverEntry is the entrance of a drive program, and the main implementing steps of the virtual serial port solution are as follows:
Step S1:AddDevice, adding a virtual serial port device. In this step, system resources, such as a reading data cache area with certain size and a writing data cache area with certain size and other corresponding timer KTIMER, KEVENT, KSPIN_LOCK, are opened up for this virtual serial port in the core drive program, and these resources are added into a new example (IoCreateDevice) maintenance pointer generated by the virtual serial port design structure body, and at the same time this serial port example is mounted into a device stack resource management link list (IoAttachDeviceToDeviceStack), which link list is an important basis of the running and maintenance of the system.

Step S2:IRP_MJ_WRITE message design method, VSerialWrite, when a serial port application program uses WriteFile, this writing data message is generated. In this message method, relevant parameters of current IRP message are acquired by IoGetCurrentIrpStackLocation, and the corresponding data in this IRP message is copied into the writing data cache area, wherein the writing data cache area uses ring management and has a function of caching a corresponding number of bytes. In the VserialWrite method, each time the data is written, the event flag of the writing data is set by KeSetEvent for indicating that the data has come into the writing data ring cache area.

Step S3:corresponding to this, there is a management thread in the communication link management program for this serial port example. There is "while" loop in this thread, each time there is data in the writing data cache area, the corresponding event flag will be set in the drive program, and WaitForSingleObject returns, WDM_IOCTL_GET DATA is set by DeviceIoControl to read the data in the virtual serial port drive writing cache area. Corresponding to the writing ring data cache area of virtual driver, at the same time, a reading data ring cache area is opened up in the communication link management program, lpOutBuffer of DeviceIoControl is a reading cache area pointer, the maximum data length of nOutBufferSize is the length of this reading data area, and it can be set freely under this upper limit condition; if there are lots of writing data area data in the virtual driver example, they exceed the length of each reading, and the writing data area event flag is set more than one times, then the communication link management program will read the data more than one times until the data has been read over. Here, it relates to the problem that how the writing data area event flag automatically be set repeatedly. Each time the first reading operation behavior of the communication link management program occurs, it automatically detects whether there is valid data in the writing data area, if yes, then the writing data area event flag is set and is automatically set repeatedly until the data has been read out completely. In this case, DeviceIoControl is a standard function of the windows operating system itself, and the definition and use of the drive message of WDM_IOCTL_GET_DATA are similar with that of windows itself. The valid data refers to the data which has never been read in the reading and writing cache data, and once it is read, then it becomes invalid data.

Step S4: Since it is multi-thread design, it does not need to maintain and inquire a relatively large media forwarding table, the communication link management program sends the data read out by the drive to an bottom layer relevant network device according to the configuration correspondence relationship with the network devices, so that it achieves the data flow in the downward direction from serial port application program, virtual serial port drive, communication link management program to network/serial port device.

Step S5:corresponding to IRP_MJ_READ message method design, the communication link management program maintains a thread corresponding to this serial port example. This thread has "while" loop, each time the network/serial port device uploads data, it detects that the network port information flags that the data arrives, and then reads the data of these network devices into corresponding cache data area.

Step S6: in the communication link management program, once one certain thread reads the data of the network device, this thread will write the data into the reading ring cache data area of the virtual serial port via such parameters as DeviceIoControl, virtual serial port descriptor, WDM_IOCTL_SET_DATA. At the same time, the virtual serial port drive program will detect this serial port example, if there is a WaitOnMaskIrp message and a flag bit of WaitMask, then end the WaitOnMaskIrp message and set a received data flag, which indicates that there is data which has already come into the reading ring cache area of the drive. Relevant parameters are set in the IOCTL_SERIAL_GET_COMMSTATUS message so as to provide an application inquiry status parameter.

Step S7:an IRP_MJ_READ message design method, VSerialRead, when a serial port application program uses ReadFile, it will generate this reading data message. If there is data in the reading ring data cache area of this virtual serial port example, these data are copied into a corresponding data area of this IRP; if there is no valid data in the reading data area when this IRP message is generated, then this IRP message is set to be suspended status, and at the same time the timer of this virtual serial port is started to prepare for asynchronously reading data achieved by the serial port application program.

Step S8:when the timer is timeout, it is checked whether there is valid data in the reading ring data area. If yes, then the data is copied into a corresponding data area of the previously suspended IRP message. At the same time, the previously suspended IRP message is cleared. If there is no data, the previous IRP message will also be cleared. This step is an important guarantee for the serial port application to read data asynchronously. Thus, it can achieve to read data synchronously or asynchronously.

By way of the above relevant steps, at the same time it achieves the data flow in the upward direction from network/serial port device, communication link management program, to serial port virtual drive serial port application program.

In addition, the dwShareMode flag bit of each serial port example CreateFile of the communication link management program needs to be set as FILE_SHARE_READ | FILE_SHARE_WRITE, only in this way, various operations such as reading and writing data and operating the handle of this serial port example can be performed simultaneously. At the same time, in this partial application, a reading and writing ring cache data area are opened up respectively. One serial port example can be configured to correspond to the data of more than one communication devices to achieve information interaction.

Fig. 4 is a flow chart of a communication method for a multi-virtual serial port system according to the embodiments of the present invention.

As shown in Fig. 4, the communication method for a multi-virtual serial port system according to the embodiments of the present invention comprises:
Step S402: a serial port management module in the application layer of the multi-virtual serial port system receives a serial port communication request from an application program.
Step S404: the serial port management module calls a serial port resource corresponding to serial port device in an operating system of the multi-virtual serial port system so as to perform the serial port communication requested by the serial port communication request.

The step of calling by the serial port management module a serial port resource corresponding to serial port device in an operating system of the multi-virtual serial port system comprises: the serial port management module calls serial port resources in one-to-one correspondence with the serial port management modules in an operating system of the multi-virtual serial port system, wherein the more than one serial port resources are in one-to-one correspondence with the more than one serial port devices.

Preferably, the step of calling by the serial port management module a serial port resource corresponding to serial port device in an operating system of the multi-virtual serial port system so as to perform the serial port communication requested by the serial port communication request comprises: the application program exchanges data with the serial port device using serial port communication.

The above method can further comprise: the serial port management module accesses a reading data cache area and writing data cache area, which are in one-to-one correspondence with the serial port management module, in the multi-virtual serial port system.

The serial port resource can communicate with the more than one serial port management modules using an IRP message.

It can be seen from the above description that the technical solution of the present invention has the following advantages:
1) it does not have to maintain the media forwarding table, i.e. a corresponding table of virtual serial port devices and network communication protocol port numbers, and each thread is responsible for guarding a corresponding socket port, while the thread and virtual serial port are bound uniquely, the efficiency of which is higher than that of single thread inquiring the media forwarding table.
2) Although multi-thread consumes more system resources, the reliability of which is higher than that of single thread centralized process due to distributed process, and single thread exiting abnormally only affects the corresponding virtual serial port service flow process, thus it ensures that the failure will not spread globally.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope of the invention is defined in the claims.

## Claims

1. A multi-virtual serial port system, comprising:
more than one serial port management modules, located in the application layer of the multi-virtual serial port system and configured to call serial port resource corresponding to serial port device to perform serial port communication, wherein the serial port resource is located in the operating system layer of the multi-virtual serial port system; wherein there are more than one the serial port resources, wherein the more than one serial port resources are in one-to-one correspondence with said the more than one serial port management modules and the more than one serial port resources are in one-to-one correspondence with the more than one serial port application programs.

2. The multi-virtual serial port system according to claim 1, **characterized in that** the serial port resources are in communication with the more than one serial port management modules by using an input/output request packet IRP message.

3. The multi-virtual serial port system according to claim 1, **characterized in that** each of the serial port resources comprises:
a reading data cache area, a writing data cache area, a timer resource, an event resource, and a lock resource.

4. The multi-virtual serial port system according to claim 1, **characterized by** further comprising:
more than one reading data cache areas and more than one writing data cache areas, located in operating system layer of the multi-virtual serial port system, wherein each of the reading data cache areas and each of the writing data cache areas are configured to be accessed by one of the serial port management modules respectively.

5. A communication method for a multi-virtual serial port system, comprising:
receiving, by a serial port management module in the application layer of the multi-virtual serial port system, a serial port communication request from an application program (S402); and calling, by the serial port management module, a serial port resource corresponding to a serial port device in an operating system of the multi-virtual serial port system so as to perform the serial port communication requested by the serial port communication request (S404);
wherein the step of calling, by the serial port management module, a serial port resource corresponding to a serial port device in an operating system of the multi-virtual serial port system further comprises: calling, by serial port management modules, serial port resources which are in one-to-one correspondence with the serial port management modules in the application layer of said multi-virtual serial port system, wherein the serial port resources are in one-to-one correspondence with serial port application programs.

6. The method according to claim 5, **characterized in that** the step of calling, by the serial port management module, a serial port resource corresponding to a serial port device in an operating system of the multi-virtual serial port system so as to perform the serial port communication requested by the serial port communication request comprises:
exchanging, by the application program, data with the serial port device by using the serial port communication.

7. The method according to claim 5, **characterized by** further comprising:
accessing, by the serial port management module, a reading data cache area and writing data cache area, which are in one-to-one correspondence with the serial port management module, in the multi-virtual serial port system.

8. The method according to claim 7, **characterized in that** the serial port resource comprises an event resource, and the step of accessing, by the serial port management module, a reading data cache area and writing data cache area, which are in one-to-one correspondence with the serial port management module, in the multi-virtual serial port system comprises:
performing automatic setting for the event resource more than one times till the access of the data in the writing data cache area has been finished.

## Patentansprüche

1. System mit mehreren virtuellen seriellen Ports, umfassend:
mehrere serielle Portverwaltungsmodule, die in der Anwendungsschicht des Systems mit mehreren virtuellen seriellen Ports lokalisiert und so konfiguriert sind, dass sie eine serielle Portressource aufrufen, die einer seriellen Portvorrichtung entspricht, um serielle Portkommunikation durchzuführen, wobei die serielle Portressource in der Betriebssystemschicht des Systems mit mehreren virtuellen seriellen Ports lokalisiert ist; wobei es mehrere der seriellen Portressourcen gibt, wobei sich die mehreren seriellen Portressourcen mit den mehreren seriellen Portverwaltungsmodulen in Eins-zu-Eins-Entsprechung befinden und sich die mehreren seriellen Portressourcen mit den mehreren seriellen Portanwendungsprogrammen in Eins-zu-Eins-Entsprechung befinden.

2. System mit mehreren virtuellen seriellen Ports nach Anspruch 1, **dadurch gekennzeichnet, dass** sich die seriellen Portressourcen unter Verwendung einer Eingabe-/Ausgabe-Anfragepaket-IRP-Nachricht mit den mehreren seriellen Portverwaltungsmodulen in Kommunikation befinden.

3. System mit mehreren virtuellen seriellen Ports nach Anspruch 1, **dadurch gekennzeichnet, dass** jede der seriellen Portressourcen umfasst:
einen Lesedaten-Cache-Bereich, einen Schreibdaten-Cache-Bereich, eine Timerressource, eine Ereignisressource, und eine Sperrressource.

4. System mit mehreren virtuellen seriellen Ports nach Anspruch 1, **dadurch gekennzeichnet, dass** es weiter umfasst:
mehrere Lesedaten-Cache-Bereiche und mehrere Schreibdaten-Cache-Bereiche, die in der Betriebssystemschicht des Systems mit mehreren virtuellen seriellen Ports lokalisiert sind, wobei jeder der Lesedaten-Cache-Bereiche und jeder der Schreibdaten-Cache-Bereiche so konfiguriert ist, dass von jeweils einem der seriellen Portverwaltungsmodule auf ihn zugegriffen wird.

5. Kommunikationsverfahren für ein System mit mehreren virtuellen seriellen Ports, umfassend:
Empfangen, durch ein serielles Portverwaltungsmodul in der Anwendungsschicht des Systems mit mehreren virtuellen seriellen Ports, einer seriellen Portkommunikationsanfrage von einem Anwendungsprogramm (S402); und
Aufrufen, durch das serielle Portverwaltungsmodul, einer seriellen Portressource, die einer seriellen Portvorrichtung in einem Betriebssystem des Systems mit mehreren virtuellen seriellen Ports entspricht, um die über die serielle Portkommunikationsanfrage angefragte serielle Portkommunikation durchzuführen (S404);
wobei der Schritt des Aufrufens, durch das serielle Portverwaltungsmodul, einer seriellen Portressource, die einer seriellen Portvorrichtung in einem Betriebssystem des Systems mit mehreren virtuellen seriellen Ports entspricht, weiter umfasst: Aufrufen, durch serielle Portverwaltungsmodule, von seriellen Portressourcen, die sich mit den seriellen Portverwaltungsmodulen in der Anwendungsschicht des Systems mit mehreren virtuellen seriellen Ports in Eins-zu-Eins-Entsprechung befinden, wobei sich die seriellen Portressourcen mit seriellen Portanwendungsprogrammen in Eins-zu-Eins-Entsprechung befinden.

6. Verfahren nach Anspruch 5, **dadurch gekennzeichnet, dass** der Schritt des Aufrufens, durch das serielle Portverwaltungsmodul, einer seriellen Portressource, die einer seriellen Portvorrichtung in einem Betriebssystem des Systems mit mehreren virtuellen seriellen Ports entspricht, um die über die serielle Portkommunikationsanfrage angefragte serielle Portkommunikation durchzuführen, umfasst:
Austauschen, durch das Anwendungsprogramm, von Daten mit der seriellen Portvorrichtung unter Verwendung der seriellen Portkommunikation.

7. Verfahren nach Anspruch 5, **dadurch gekennzeichnet, dass** es weiter umfasst:
Zugreifen, durch das serielle Portverwaltungsmodul, auf einen Lesedaten-Cache-Bereich und Schreibdaten-Cache-Bereich, die sich mit dem seriellen Portverwaltungsmodul im System mit mehreren virtuellen seriellen Ports in Eins-zu-Eins-Entsprechung befinden.

8. Verfahren nach Anspruch 7, **dadurch gekennzeichnet, dass** die serielle Portressource eine Ereignisressource umfasst, und der Schritt des Zugreifens, durch das serielle Portverwaltungsmodul, auf einen Lesedaten-Cache-Bereich und Schreibdaten-Cache-Bereich, die sich mit dem seriellen Portverwaltungsmodul im System mit mehreren virtuellen seriellen Ports in Eins-zu-Eins-Entsprechung befinden, umfasst:
mehrmaliges Durchführen von automatischer Einstellung für die Ereignisressource, bis der Zugriff auf die Daten im Schreibdaten-Cache-Bereich abgeschlossen ist.

## Revendications

1. Système de ports série multivirtuel, comprenant :
plusieurs modules de gestion de port série, situés dans la couche d'application du système de ports série multivirtuel et configurés pour appeler une ressource de port série correspondant à un dispositif de port série pour réaliser une communication de port série, dans lequel la ressource de port série est située dans une couche de système d'exploitation du système de ports série multivirtuel ; dans lequel il y a plusieurs ressources de port série, dans lequel les plusieurs ressources de port série sont en correspondance biunivoque avec lesdits plusieurs modules de gestion de port série et les plusieurs ressources de port série sont en correspondance biunivoque avec les plusieurs programmes d'application de port série.

2. Système de ports série multivirtuel selon la revendication 1, **caractérisé en ce que** les ressources de port série sont en communication avec les plusieurs modules de gestion de port série à l'aide d'un message IRP de paquet de demande d'entrée/sortie.

3. Système de ports série multivirtuel selon la revendication 1, **caractérisé en ce que** chacune des ressources de port série comprend :
une zone de cache de données de lecture, une zone de cache de données d'écriture, une ressource de temporisateur, une ressource d'événement et une ressource de verrouillage.

4. Système de ports série multivirtuel selon la revendication 1, **caractérisé en ce qu'**il comprend en outre : plusieurs zones de cache de données de lecture et plusieurs zones de cache de données d'écriture, situées dans la couche de système d'exploitation du système de ports série multivirtuel, dans lequel chacune des zones de cache de données de lecture et chacune des zones de cache de données d'écriture sont configurées pour faire l'objet d'un accès respectivement par un des modules de gestion de port série.

5. Procédé de communication pour un système de ports série multivirtuel, comprenant :
la réception, par un module de gestion de port série dans la couche d'application du système de ports série multivirtuel, d'une demande de communication de port série depuis un programme d'application (S402) ; et
l'appel, par le module de gestion de port série, d'une ressource de port série correspondant à un dispositif de port série dans un système d'exploitation du système de ports série multivirtuel afin de réaliser la communication de port série demandée par la demande de communication de port série (S404) ;
dans lequel l'étape d'appel, par le module de gestion de port série, d'une ressource de port série correspondant à un dispositif de port série dans un système d'exploitation du système de ports série multivirtuel comprend en outre : l'appel, par des modules de gestion de port série, de ressources de port série qui sont en correspondance biunivoque avec les modules de gestion de port série dans la couche d'application dudit système de ports série multivirtuel, dans lequel les ressources de port série sont en correspondance biunivoque avec des programmes d'application de port série.

6. Procédé selon la revendication 5, **caractérisé en ce que** l'étape d'appel, par le module de gestion de port série, d'une ressource de port série correspondant à un dispositif de port série dans un système d'exploitation du système de ports série multivirtuel afin de réaliser la communication de port série demandée par la demande de communication de port série comprend :
l'échange, par le programme d'application, de données avec le dispositif de port série à l'aide de la communication de port série.

7. Procédé selon la revendication 5, **caractérisé en ce qu'**il comprend en outre :
l'accès, par le module de gestion de port série, à une zone de cache de données de lecture et à une zone de cache de données d'écriture, qui sont en correspondance biunivoque avec le module de gestion de port série, dans le système de ports série multivirtuel.

8. Procédé selon la revendication 7, **caractérisé en ce que** la ressource de port série comprend une ressource d'événement et l'étape d'accès, par le module de gestion de port série, à une zone de cache de données de lecture et à une zone de cache de données d'écriture, qui sont en correspondance biunivoque avec le module de gestion de port série, dans le système de ports série multivirtuel comprend :
la réalisation d'un réglage automatique pour la ressource d'événement plus d'une fois jusqu'à ce que l'accès des données dans la zone de cache de données d'écriture ait été terminé.
